(19) Europäisches Patentamt / European Patent Office / Office européen des brevets

(11) **EP 4 198 900 A1**

(12) **EUROPEAN PATENT APPLICATION**
published in accordance with Art. 153(4) EPC

(43) Date of publication:
**21.06.2023 Bulletin 2023/25**

(21) Application number: **21859815.9**

(22) Date of filing: **21.06.2021**

(51) International Patent Classification (IPC):
**G06T 7/70** (2017.01)          **G06K 9/00** (2022.01)
**G01C 25/00** (2006.01)

(52) Cooperative Patent Classification (CPC):
**G01C 25/00; G06F 18/00; G06T 7/70; G06V 20/56**

(86) International application number:
**PCT/CN2021/101323**

(87) International publication number:
**WO 2022/041971 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.08.2020 CN 202010890933**

(71) Applicant: **Huawei Technologies Co., Ltd.
Shenzhen, Guangdong 518129 (CN)**

(72) Inventor: **CHEN, Chaoyue
Shenzhen, Guangdong 518129 (CN)**

(74) Representative: **Maiwald GmbH
Engineering
Elisenhof
Elisenstrasse 3
80335 München (DE)**

(54) **POSITIONING RELIABILITY TEST METHOD AND RELATED DEVICE**

(57)     Embodiments of this application relate to the field of intelligent driving technologies, and specifically provide a positioning reliability detection method and a related device. The method includes: obtaining a first positioning result of a target vehicle; determining a first element image based on the first positioning result and a high-precision map; and performing reliability detection on the first positioning result based on the first element image, to obtain a first detection result of the first positioning result. According to embodiments of this application, reliability detection can be performed on a positioning result of an autonomous vehicle, so that a potential safety risk in self-driving is reduced.

201: Obtain a first positioning result of a target vehicle

202: Determine a first element image based on the first positioning result and a high-precision map

203: Perform reliability detection on the first positioning result based on the first element image, to obtain a first detection result of the first positioning result

FIG. 2

EP 4 198 900 A1

## Description

This application claims priority to Chinese Patent Application No. 202010890933.8, filed with the China National Intellectual Property Administration on August 29, 2020 and entitled "POSITIONING RELIABILITY DETECTION METHOD AND RELATED DEVICE", which is incorporated herein by reference in its entirety.

## TECHNICAL FIELD

This application relates to the field of intelligent driving technologies, and in particular, to a positioning reliability detection method and a related device.

## BACKGROUND

Autonomous vehicles strongly depend on a positioning technology. Positioning is a prerequisite for implementation of another function in a self-driving technology. Due to a positioning loss or a positioning error, the autonomous vehicle may fail to operate normally, and even a serious accident is caused. However, a fusion positioning manner is used in most of existing high-precision positioning methods. This method (such as a visual odometer or a laser odometer) for performing high-precision positioning by adding an algorithm cannot provide evaluation of reliability of positioning performance. Herein, a positioning device such as a sensor at a current stage can generally obtain positioning performance of the sensor based on an observed value, and provide a positioning error covariance. The positioning error covariance can reflect reliability of a positioning result to some extent, but a confidence is not high. Because control and sensing algorithms in the self-driving technology depend on the positioning result, once the positioning result is inaccurate, the control and sensing algorithms in the self-driving technology are seriously affected, and a potential safety risk is caused to self-driving.

## SUMMARY

Embodiments of this application disclose a positioning reliability detection method and a related device, to perform reliability detection on a positioning result of an autonomous vehicle, so that a potential safety risk in self-driving is reduced.

A first aspect of embodiments of this application discloses a positioning reliability detection method, applied to a vehicle-mounted terminal, and the method includes: obtaining a first positioning result of a target vehicle; determining a first element image based on the first positioning result and a high-precision map; and performing reliability detection on the first positioning result based on the first element image, to obtain a first detection result of the first positioning result.

It can be learned that, in this embodiment, after obtaining the first positioning result of the target vehicle, the vehicle-mounted terminal determines the first element image based on the first positioning result and the high-precision map, and then performs reliability detection on the first positioning result based on the first element image, to obtain the first detection result of the first positioning result. Because the first positioning result is converted into a binary image based on the high-precision map, the first positioning result is compared with the high-precision map, so that whether the first positioning result is reliable is detected. Further, the first positioning result is used when the first positioning result is reliable, so that a hazard caused by unreliable positioning is effectively reduced, and a potential safety risk in self-driving is reduced.

In an example implementation, the performing reliability detection on the first positioning result based on the first element image, to obtain a first detection result of the first positioning result includes: inputting the first element image into a target detection model for processing, to obtain the first detection result of the first positioning result, where the target detection model is implemented based on a visual geometry group (Visual Geometry Group, VGG) architecture.

It can be learned that, in this implementation, the first element image obtained by converting the first positioning result is input into the target detection model implemented based on the VGG architecture, and the target detection model is used to determine the first element image, to detect whether the first element image is an element image obtained by converting a normal positioning result or an element image obtained by converting an abnormal positioning result, so that whether the first positioning result is reliable is detected.

In an example implementation, before the inputting the first element image into a target detection model for processing, to obtain the first detection result of the first positioning result, the method further includes: obtaining N second positioning results and M third positioning results of vehicles, where the second positioning result is a historical positioning result of normal positioning, the third positioning result is a historical positioning result of abnormal positioning, and N and M are positive integers; determining N second element images based on the N second positioning results and the high-precision map, and determining M third element images based on the M third positioning results and the high-precision map, where the N second positioning results are in a one-to-one correspondence with the N second element images, and the M third positioning results are in a one-to-one correspondence with the M third element images; and training an initial detection model by using the N second element images and the M third element images, to obtain the target detection model, where the initial detection model is implemented based on the VGG architecture.

It can be learned that, in this implementation, before the first element image is determined by using the target detection model, a large quantity of historical positioning results of vehicles are obtained; and based on the high-precision map, the second positioning result of normal positioning is converted into the second element image as a normal positioning category image, and the third positioning result of abnormal positioning is converted into the third element image as an abnormal positioning category image. The second element image and the third element image are used to train the initial detection model implemented based on the VGG architecture, to obtain the target detection model, so that reliability detection is performed on a real-time first positioning result of the target vehicle by using the target detection model.

In an example implementation, a target element image is determined based on a target positioning result and the high-precision map by using the following steps: obtaining map element point data in a preset region from the high-precision map, where the preset region is determined based on the target positioning result, and the map element point data includes a plurality of map element points; converting first coordinates of each of the plurality of map element points into second coordinates, where the first coordinates of each map element point are coordinates of the map element point in a world coordinate system, the second coordinates are coordinates of the map element point in a second coordinate system, and the second coordinate system is a coordinate system in which positioning coordinates in the target positioning result are used as an origin; and converting the second coordinates of each map element point into image coordinates based on an intrinsic parameter of a camera of the vehicle-mounted terminal, to obtain the target element image, where pixel coordinates of the target element image are the image coordinates. If the target positioning result is the first positioning result, the target element image is the first element image; if the target positioning result is the second positioning result, the target element image is the second element image; or if the target positioning result is the third positioning result, the target element image is the third element image.

It can be learned that, in this implementation, the map element point data in the preset region is first obtained from the high-precision map, where the preset region is determined based on the target positioning result, and the map element point data includes the plurality of map element points; then the first coordinates of each of the plurality of map element points are converted into the second coordinates, where the first coordinates of each map element point are the coordinates of the map element point in the world coordinate system, the second coordinates are the coordinates of the map element point in the second coordinate system, and the second coordinate system is the coordinate system in which the positioning coordinates in the target positioning result are used as the origin; and then the second coordinates of each map element point are converted into the image coordinates based on the intrinsic parameter of the camera of the vehicle-mounted terminal, to obtain the target element image. The pixel coordinates of the target element image are the image coordinates, so that the positioning result is converted into the element image, and the positioning result is compared with the high-precision map, and therefore detection on reliability of the positioning result is facilitated. If the target positioning result is the first positioning result, the target element image is the first element image, so that reliability of a real-time positioning result of the target vehicle can be detected. If the target positioning result is the second positioning result, the target element image is the second element image. If the target positioning result is the third positioning result, the target element image is the third element image, so that an element image corresponding to the historical positioning result of the vehicle is obtained, and the element image corresponding to the historical positioning result can be used to train the initial detection model, to obtain the target detection model used to detect reliability of the real-time positioning result.

In an example implementation, the first coordinates are converted into the second coordinates according to the following formula:

$$\begin{bmatrix} X_c \\ Y_c \\ Z_c \end{bmatrix} = \begin{bmatrix} R & T \\ 0^T & 1 \end{bmatrix} * \begin{bmatrix} X_w \\ Y_w \\ Z_w \\ 1 \end{bmatrix},$$

where

$(X_w, Y_w, Z_w)$ is the first coordinates, $(X_c, Y_c, Z_c)$ is the second coordinates, R is a three degrees of freedom rotation matrix of a posture in the target positioning result, and T is a translation matrix of the positioning coordinates in the target positioning result.

It can be learned that, in this implementation, the first coordinates of the map element point are converted into the second coordinates by using the three degrees of freedom rotation matrix of the posture in the target positioning result and the translation matrix of the positioning coordinates in the target positioning result. Because the second coordinates are the coordinates of the map element point in the coordinate system in which the positioning coordinates in the target positioning result are used as the origin, the coordinates of the map element point on the high-precision map are converted into the coordinate system in which the vehicle positioning coordinates are used as the origin, to facilitate detection of whether the positioning result of the vehicle is reliable.

In an example implementation, the second coordinates are converted into the image coordinates according to the following formula:

$$Z_c * \begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} * \begin{bmatrix} X_c \\ Y_c \\ Z_c \end{bmatrix},$$

where

(u, v) is the image coordinates, $f_x$ and $f_y$ are camera focal lengths of the vehicle-mounted terminal, and $u_0$ and $v_0$ are principal point coordinates relative to an imaging plane.

It can be learned that, in this implementation, the second coordinates are converted into the image coordinates by using the camera focal lengths of the vehicle-mounted terminal, to obtain the target element image corresponding to the target positioning result, and the pixel coordinates of the target element image are the image coordinates obtained by converting the second coordinates, to compare the target positioning result with the high-precision map, and therefore, detection on reliability of the target positioning result is facilitated.

In an example implementation, the method further includes: if the first positioning result directly comes from a positioning sensor, obtaining a positioning error covariance determined by the positioning sensor for the first positioning result; and determining a second detection result of the first positioning result based on the first detection result and the positioning error covariance.

It can be learned that, in this implementation, in a scenario in which the positioning sensor directly provides the first positioning result, the positioning sensor provides the positioning error covariance corresponding to the first positioning result, and the positioning error covariance may reflect reliability of the first positioning result. On this basis, reliability of the first positioning result is further evaluated with reference to the first detection result, so that confidence of reliability of the first positioning result can be further improved.

In an example implementation, the method further includes: if the first detection result and the second detection result indicate that the first positioning result is normal, performing self-driving by using the first positioning result; or if the first detection result and/or the second detection result indicate/indicates that the first positioning result is abnormal, alerting to disable self-driving.

It can be learned that, in this implementation, when it is detected that the first positioning result is normal, it indicates that the first positioning result is reliable, and can be used to perform self-driving of the autonomous vehicle; and when it is detected that the first positioning result is abnormal, it indicates that the first positioning result is unreliable, and self-driving of the autonomous vehicle can be alerted to be disabled, and manual takeover is performed, to reduce a potential safety risk caused by unreliable positioning.

A second aspect of embodiments of this application discloses a positioning reliability detection apparatus, applied to a vehicle-mounted terminal, and the apparatus includes: an obtaining unit, configured to obtain a first positioning result of a target vehicle; a determining unit, configured to determine a first element image based on the first positioning result and a high-precision map; and a detection unit, configured to perform reliability detection on the first positioning result based on the first element image, to obtain a first detection result of the first positioning result.

In an example implementation, the detection unit is configured to input the first element image into a target detection model for processing, to obtain the first detection result of the first positioning result. The target detection model is implemented based on a VGG architecture.

In an example implementation, the apparatus further includes a training unit, configured to: obtain N second positioning results and M third positioning results of vehicles, where the second positioning result is a historical positioning result of normal positioning, the third positioning result is a historical positioning result of abnormal positioning, and N and M are positive integers; determine N second element images based on the N second positioning results and the high-precision map, and determine M third element images based on the M third positioning results and the high-precision map, where the N second positioning results are in a one-to-one correspondence with the N second element images, and the M third positioning results are in a one-to-one correspondence with the M third element images; and train an initial detection model by using the N second element images and the M third element images, to obtain the target detection model, where the initial detection model is implemented based on the VGG architecture.

In an example implementation, the determining unit is configured to: obtain map element point data in a preset region from the high-precision map, where the preset region is determined based on the target positioning result, and the map element point data includes a plurality of map element points; convert first coordinates of each of the plurality of map element points into second coordinates, where the first coordinates of each map element point are coordinates of the map element point in a world coordinate system, the second coordinates are coordinates of the map element point in a second coordinate system, and the second coordinate system is a coordinate system in which positioning coordinates in the target positioning result are used as an origin; and convert the second coordinates of each map element point into image coordinates based on an intrinsic parameter of a camera of the vehicle-mounted terminal, to obtain the target element image, where pixel coordinates of the target element image are the image coordinates. If the target positioning result is the first positioning result, the target element image is the first element image; if the target positioning result is the second positioning result, the target element image is the second element image; or if the target positioning result is the third positioning result, the target element image is the third element image.

In an example implementation, the first coordinates are converted into the second coordinates according to the following formula:

$$\begin{bmatrix} X_c \\ Y_c \\ Z_c \end{bmatrix} = \begin{bmatrix} R & T \\ 0^T & 1 \end{bmatrix} * \begin{bmatrix} X_w \\ Y_w \\ Z_w \\ 1 \end{bmatrix},$$

where

$(X_w, Y_w, Z_w)$ is the first coordinates, $(X_c, Y_c, Z_c)$ is the second coordinates, R is a three degrees of freedom rotation matrix of a posture in the target positioning result, and T is a translation matrix of the positioning coordinates in the target positioning result.

In an example implementation, the second coordinates are converted into the image coordinates according to the following formula:

$$Z_c * \begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} * \begin{bmatrix} X_c \\ Y_c \\ Z_c \end{bmatrix},$$

where

$(u, v)$ is the image coordinates, $f_x$ and $f_y$ are camera focal lengths of the vehicle-mounted terminal, and $u_0$ and $v_0$ are principal point coordinates relative to an imaging plane.

In an example implementation, the detection unit is further configured to: if the first positioning result directly comes from a positioning sensor, obtain a positioning error covariance determined by the positioning sensor for the first positioning result; and determine a second detection result of the first positioning result based on the first detection result and the positioning error covariance.

In an example implementation, the apparatus further includes a processing unit, configured to: if the first detection result and the second detection result indicate that the first positioning result is normal, perform self-driving by using the first positioning result; or if the first detection result and/or the second detection result indicate/indicates that the first positioning result is abnormal, alert to disable self-driving.

A third aspect of embodiments of this application discloses a vehicle-mounted terminal, including a processor, a memory, a communication interface, and one or more programs. The one or more programs are stored in the memory and are configured to be executed by the processor. The program includes instructions for performing steps in the method in any implementation of the first aspect.

A fourth aspect of embodiments of this application discloses a chip. The chip includes a processor, configured to invoke a computer program from a memory and run the computer program, so that a device on which the chip is mounted performs the method in any implementation of the first aspect.

A fifth aspect of embodiments of this application discloses a computer-readable storage medium. The computer-readable storage medium stores a computer program used for electronic data exchange, and the computer program enables a computer to perform the method in any implementation of the first aspect.

A sixth aspect of embodiments of this application discloses a computer program product, and the computer program product enables a computer to perform the method in any implementation of the first aspect.

A seventh aspect of embodiments of this application discloses an intelligent vehicle. The intelligent vehicle includes a control system, and the control system performs the method in any implementation of the first aspect, to control the intelligent vehicle to travel.

## BRIEF DESCRIPTION OF DRAWINGS

The following describes the accompanying drawings used in embodiments of this application.

FIG. 1 is a schematic diagram of a structure of a positioning reliability detection system according to an embodiment of this application;
FIG. 2 is a schematic flowchart of a positioning reliability detection method according to an embodiment of this application;
FIG. 3 is a schematic diagram of an element image according to an embodiment of this application;
FIG. 4 is a schematic diagram of another element image according to an embodiment of this application;
FIG. 5 is a schematic diagram of still another element image according to an embodiment of this application;
FIG. 6 is a schematic diagram of obtaining map element point data according to an embodiment of this application;
FIG. 7 is a schematic diagram of a structure of a positioning reliability detection apparatus according to an embodiment of this application; and
FIG. 8 is a schematic diagram of a structure of a vehicle-mounted terminal according to an embodiment of this application.

## DESCRIPTION OF EMBODIMENTS

The following describes embodiments of this application with reference to the accompanying drawings in embodiments of this application.

Technical solutions provided in embodiments of this application can be applied to, but not limited to the following scenarios.

Scenario 1: Positioning is implemented by using an algorithm. For example, positioning is output in a multi-sensor fusion manner. In this scenario, it is difficult to provide a reliability index of a positioning result. Reliability of the positioning result can be provided by using the technical solutions provided in embodiments of this application.

Scenario 2: A positioning result is directly provided by using a positioning sensor, such as a global positioning system (global positioning position system, GPS) or an inertial measurement unit (Inertial Measuring Unit, IMU). In this scenario, the GPS and the IMU provide a positioning error covariance corresponding to the positioning result. The positioning error covariance may reflect a reliability index of the positioning result. With reference to the technical solutions provided in embodiments of this application, a confidence of reliability of the positioning result can be further improved.

For difficult problems that it is difficult for the high-precision fusion positioning implemented by using an algorithm to provide reliability of the positioning result in real time, and confidence of the positioning error covariance provided by the positioning sensor is not high, an embodiment of this application provides a positioning reliability detection system, so that reliability of a positioning result provided by a current fusion positioning algorithm can be evaluated based on the positioning result, or reliability of the positioning result can be evaluated in real time with reference to the positioning error covariance provided by the positioning sensor, to provide a determining standard for whether the positioning result is used in subsequent sensing and planning algorithms to perform self-driving, and therefore a potential safety risk is resolved.

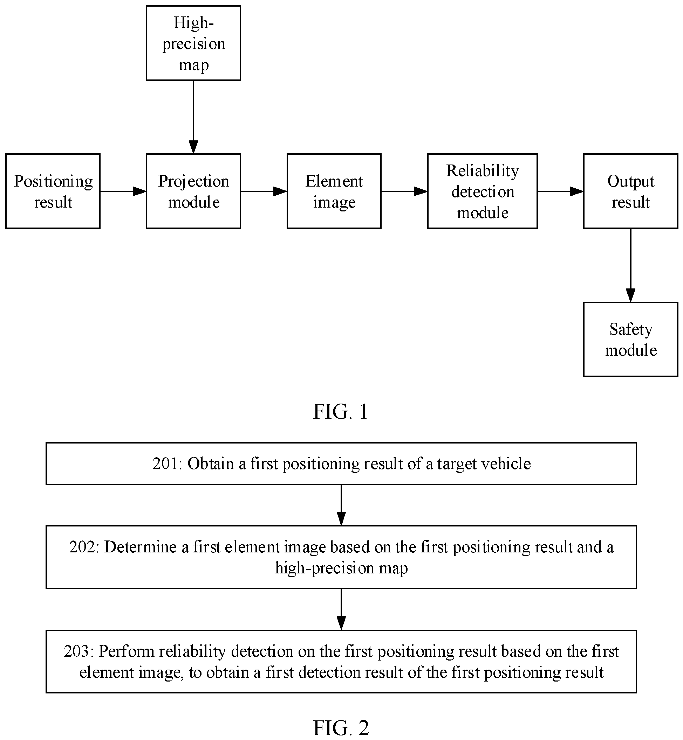

FIG. 1 is a schematic diagram of a structure of a positioning reliability detection system according to an embodiment of this application. The positioning reliability detection system includes a projection module, a reliability detection module, and a safety module. The projection module obtains an element image based on a positioning result with reference to a high-precision map. Specifically, the projection module obtains a continuous positioning result provided by an algorithm or a continuous positioning result directly provided by a positioning sensor, and projects a map element to an image coordinate system based on the positioning result with reference to the high-precision map, to obtain the projected element image. Optionally, based on a VGG model, the reliability detection module may input, to the reliability detection module, the element image obtained through projection by the projection module, to determine reliability of the positioning result, and output reliability of the positioning result. The safety module performs subsequent processing based on a real-time determining result output by the reliability detection module, and provides a warning about whether manual takeover is required.

The high-precision map is an electronic map with higher precision and more data dimensions. The higher precision is reflected in accuracy to a centimeter level, and the more data dimensions are reflected in that traffic-related surrounding static information is included in addition to road information. The high-precision map stores a large amount of driving assistance information as structured data. The information can be divided into two categories. A first category of information is road data, for example, lane information such as a location, a type, a width, a slope, and a curvature of a lane line. A second category of information is information of fixed objects around a lane, for example, information such as a traffic sign and traffic lights, a lane height limit, a sewer outlet, an obstacle, and other road details, and also includes infrastructure information such as an elevated object, a protective guard, a quantity of the fixed objects, a road edge type, and a roadside landmark.

The element image is obtained as follows: Map element point data in a preset range of the positioning coordinates is obtained on the high-precision map based on the positioning result of the vehicle provided by the algorithm or the positioning coordinates in the positioning result of the vehicle that is directly provided by the positioning sensor; then, coordinates of a map element point in the map element point data in a world coordinate system are converted into coordinates in a local coordinate system in which the positioning coordinates are used as an origin; and then, the coordinates of the map element point in the local coordinate system are converted into image coordinates. An image obtained by projecting the map element point based on the image coordinates is the element image.

In the positioning reliability detection system described in FIG. 1, the positioning result is effectively compared with the high-precision map, to output reliability of the positioning result, and provide a determining basis for whether to continue using the positioning result in a subsequent algorithm. This helps improve safety of an autonomous vehicle.

FIG. 2 is a schematic flowchart of a positioning reliability detection method according to an embodiment of this application. The method is applied to a vehicle-mounted terminal. The method includes but is not limited to the following steps.

Step 201: Obtain a first positioning result of a target vehicle.

The first positioning result includes positioning coordinates of the target vehicle and pose information of the target vehicle.

Specifically, the vehicle-mounted terminal can be mounted on the target vehicle, and the vehicle-mounted terminal may obtain, in real time, the first positioning result of the target vehicle that is provided by a fusion positioning algorithm, or obtain, in real time, the first positioning result of the target vehicle that is directly provided by a positioning device such as a sensor GPS or an IMU.

Step 202: Determine a first element image based on the first positioning result and a high-precision map.

The vehicle-mounted terminal may store the high-precision map. After the first positioning result of the target vehicle is obtained, the first element image can be obtained based on the first positioning result in combination with a projection on the high-precision map.

Specifically, the first element image is obtained by obtaining, on the high-precision map, map element point data in a preset range of positioning coordinates of the target vehicle in the first positioning result based on the positioning coordinates, and then performing coordinate transformation on map element point coordinates in the map element point data based on the first positioning result. Therefore, the first positioning result is projected to the high-precision map to obtain the first element image. In other words, the target vehicle is projected to the high-precision map to obtain the first element image.

For example, map element point data in a semicircular range in a forward looking direction of the positioning coordinates of the target vehicle can be obtained, and then the first element image is obtained through projection. In this case, the first element image is an image in the forward looking direction of the target vehicle. In other words, the target vehicle is projected to the high-precision map, and a picture seen in the forward looking direction of the target vehicle is the first element image.

Step 203: Perform reliability detection on the first positioning result based on the first element image, to obtain a first detection result of the first positioning result.

Specifically, the first element image can be input to an image recognition model for recognition, to determine whether the first positioning result is reliable.

For example, when the first element image is a picture seen in the forward looking direction of the target vehicle, if a location and/or a pose of a map element point in the first element image are/is consistent with a location and/or a pose of the map element point seen when the vehicle is normally driven, it indicates that the first positioning result is reliable; or otherwise, it indicates that the first positioning result is unreliable. For example, when the vehicle normally travels on a road, the forward looking direction of the vehicle is parallel to a road line, and if the road line and the forward looking direction of the vehicle in the first element image intersect, it indicates that the first positioning result is unreliable. Alternatively, when the vehicle normally travels on the road, the forward looking direction of the vehicle points to the end of the road, and if the forward looking direction of the vehicle in the first element image points to the sky or another direction, it indicates that the first positioning result is unreliable.

In the method described in FIG. 2, after obtaining the first positioning result of the target vehicle, the vehicle-mounted terminal determines the first element image based on the first positioning result and the high-precision map, and then performs reliability detection on the first positioning result based on the first element image, to obtain the first detection result of the first positioning result. Because the first positioning result is converted into a binary image based on the high-precision map, the first positioning result is compared with the high-precision map, so that whether the first positioning result is reliable is detected

In an example implementation, the performing reliability detection on the first positioning result based on the first element image, to obtain a first detection result of the first positioning result includes: inputting the first element image into a target detection model for processing, to obtain the first detection result of the first positioning result, where the target detection model is implemented based on a visual geometry group architecture.

Specifically, the target detection model includes an offline trained classification model using VGG16 as a backbone network. The first element image can be input to the offline trained classification model using VGG16 as the backbone network, and the first element image is determined, to determine whether the first element image is an element image output by a normal positioning result or an element image output by an abnormal positioning result.

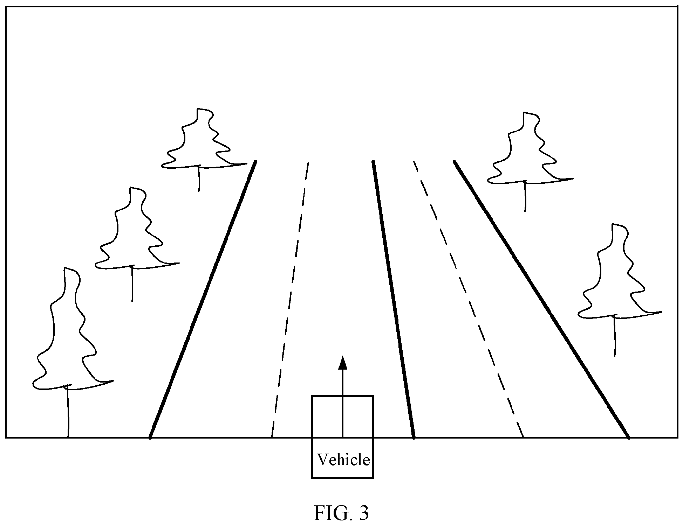

For example, also refer to FIG. 3. FIG. 3 is a schematic diagram of an element image according to an embodiment of this application. FIG. 3 shows a first element image obtained through conversion when the first positioning result of the target vehicle is normal. If the first element image is input to the offline trained classification model using VGG16 as the backbone network, the offline trained classification model using VGG16 as the backbone network may determine the first element image, for example, determine a difference between the location of the map element point in the forward looking direction of the target vehicle and the location of the map element point in the forward looking direction of the vehicle when the vehicle travels normally. When the vehicle normally travels on the road, the forward looking direction of the vehicle is parallel to the road line, and the offline trained classification model using VGG16 as the backbone network identifies, from a perspective shown in FIG. 3, that the forward looking direction of the target vehicle is also parallel to the road line, to determine that the first positioning result is reliable.

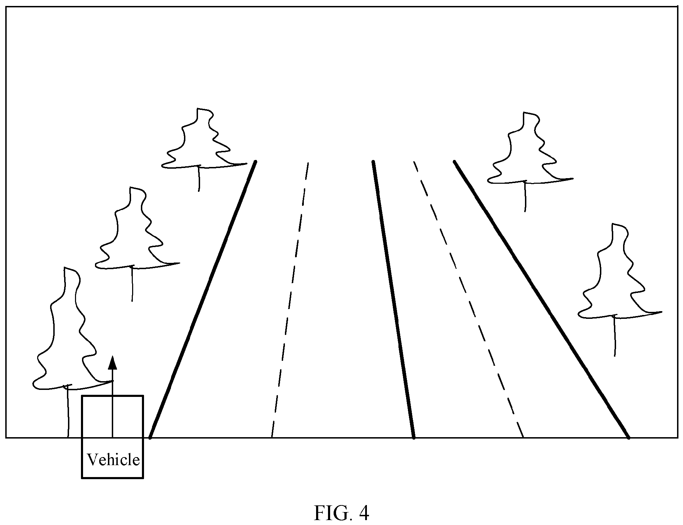

For another example, also refer to FIG. 4. FIG. 4 is a schematic diagram of another element image according to an embodiment of this application. FIG. 4 shows a first element image obtained through conversion when the first positioning result of the target vehicle is abnormal. If the first element image is input to the offline trained classification model using VGG16 as the backbone network, the offline trained classification model using VGG16 as the backbone network may identify, from a perspective shown in FIG. 4, that the target vehicle is not on the lane, that is, identify that the target vehicle is in a walkway forest on a roadside. Actually, the vehicle normally travels on the road, and therefore, it is determined that the first positioning result is unreliable.

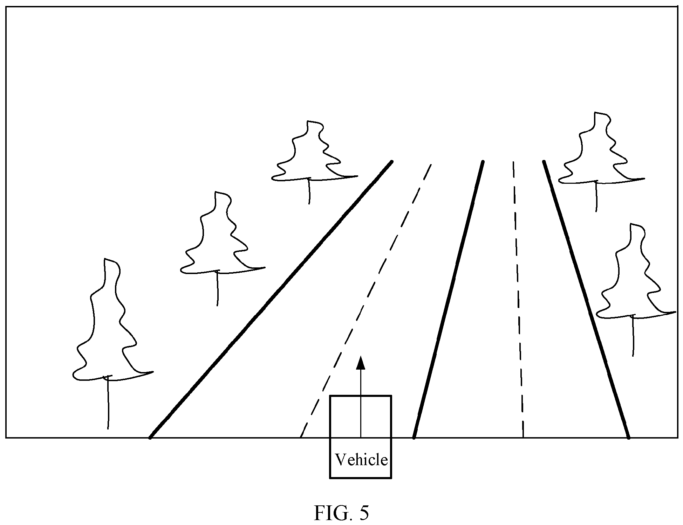

For another example, also refer to FIG. 5. FIG. 5 is a schematic diagram of still another element image according to an embodiment of this application. FIG. 5 shows a first element image obtained through conversion when the first positioning result of the target vehicle is abnormal. If the first element image is input to the offline trained classification model using VGG16 as the backbone network, the offline trained classification model using VGG16 as the backbone network may identify, from a perspective shown in FIG. 5, that the forward looking direction of the target vehicle and the road line intersect, but the forward looking direction of the vehicle is parallel to the road line when the vehicle normally travels on the road, and therefore, it is determined that the first positioning result is unreliable.

It can be learned that, in this implementation, the first element image obtained by converting the first positioning result is input to the target detection model implemented based on the VGG architecture, and the target detection model is used to determine the first element image, to detect whether the first element image is an element image obtained by converting a normal positioning result or an element image obtained by converting an abnormal positioning result, so that whether the first positioning result is reliable is detected.

In an example implementation, before the inputting the first element image to a target detection model for processing, to obtain the first detection result of the first positioning result, the method further includes: obtaining N second positioning results and M third positioning results of vehicles, where the second positioning result is a historical positioning result of normal positioning, the third positioning result is a historical positioning result of abnormal positioning, and N and M are positive integers; determining N second element images based on the N second positioning results and the high-precision map, and determining M third element images based on the M third positioning results and the high-precision map, where the N second positioning results are in a one-to-one correspondence with the N second element images, and the M third positioning results are in a one-to-one correspondence with the M third element images; and training an initial detection model by using the N second element images and the M third element images, to obtain the target detection model, where the initial detection model is implemented based on the visual geometry group architecture.

Specifically, the initial detection model is the classification model using VGG16 as the backbone network. By recording GPS positioning data of a real vehicle, the second element image generated by projecting the second positioning result of normal positioning can be used as a normal positioning category image, and the third element image generated by projecting the third positioning result of abnormal positioning can be used as an abnormal positioning category image, and then the normal positioning category image and the abnormal positioning category image are input to the initial detection model for training, to obtain the target detection model.

In a process of training the classification model using VGG16 as the backbone network, an ImageNet pre-training model parameter is used as a network initial weight. A training image size is 224*224; there are two training types, namely, the normal positioning category image and the abnormal positioning category image; dropout is set to 0.5; and a batch size is 8.

It can be learned that, in this implementation, before the first element image is determined by using the target detection model, historical positioning results of vehicles are obtained; and based on the high-precision map, a second positioning result of normal positioning is converted into a second element image as a normal positioning category image, and a third positioning result of abnormal positioning is converted into a third element image as an abnormal positioning category image. The second element image and the third element image are used to train the initial detection model implemented based on the VGG architecture, to obtain the target detection model, so that reliability detection is performed on a real-time first positioning result of the target vehicle by using the target detection model.

In an example implementation, a target element image is determined based on a target positioning result and the high-precision map by using the following steps: obtaining map element point data in a preset region from the high-precision map, where the preset region is determined based on the target positioning result, and the map element point data includes a plurality of map element points; converting first coordinates of each of the plurality of map element points into second coordinates, where the first coordinates of each map element point are coordinates of the map element point in a world coordinate system, the second coordinates are coordinates of the map element point in a second coordinate system, and the second coordinate system is a coordinate system in which positioning coordinates in the target positioning result are used as an origin; and converting the second coordinates of each map element point into image coordinates based on an intrinsic parameter of a camera of the vehicle-mounted terminal, to obtain the target element image, where pixel coordinates of the target element image are the image coordinates. If the target positioning result is the first positioning result, the target element image is the first element image; if the target positioning result is the second positioning result, the target element image is the second element image; or if the target positioning result is the third positioning result, the target element image is the third element image.

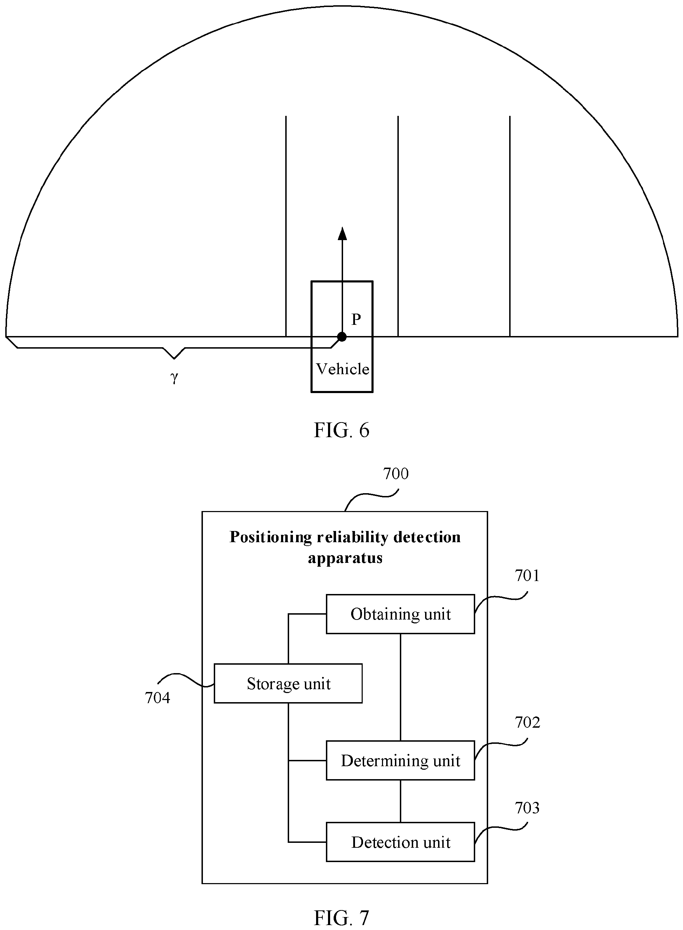

Specifically, as shown in FIG. 6, a target positioning result $P(x,y,z,r,p,y)$ of a target location $(x,y,z)$ and a pose is obtained, and the high-precision map is obtained. A semicircular region in which the target positioning result $P$ is a center point and a radius is $\gamma$ in the forward looking direction of the vehicle is used as the preset region. The map element point data map_near in the semicircular region, that is, a map element point set of all map elements in the semicircular region in the world coordinate system is obtained. The map elements include: a telegraph pole, a lane line, a guide line, and the like. $\gamma$ is a configurable value and is 50 m by default. Then, for the map element point in map_near, first coordinates $(X_w, Y_w, Z_w)$ of the map element point in the world coordinate system are converted into second coordinates $(X_c, Y_c, Z_c)$ in the local coordinate system in which $P$ is used as the origin. Then, for a map element point in the local coordinate system map_near in which map_near is used as the origin, the second coordinates $(X_c, Y_c, Z_c)$ of the map element point are converted into image coordinates (u, v) by using the intrinsic parameter of the camera, that is, the pixel coordinates (u, v) are generated, to generate the projected target element image.

It can be learned that, in this implementation, the map element point data in the preset region is first obtained from the high-precision map, where the preset region is determined based on the target positioning result, and the map element point data includes the plurality of map element points; then the first coordinates of each of the plurality of map element points are converted into the second coordinates, where the first coordinates of each map element point are the coordinates of the map element point in the world coordinate system, the second coordinates are the coordinates of the map element point in the second coordinate system, and the second coordinate system is the coordinate system in which the positioning coordinates in the target positioning result are used as the origin; and then the second coordinates of each map element point are converted into the image coordinates based on the intrinsic parameter of the camera of the vehicle-mounted terminal, to obtain the target element image. The pixel coordinates of the target element image are the image coordinates, so that the positioning result is converted into the element image, and the positioning result is compared with the high-precision map, and therefore detection on reliability of the positioning result is facilitated. If the target positioning result is the first positioning result, the target element image is the first element image, so that reliability of a real-time positioning result of the target vehicle can be detected. If the target positioning result is the second positioning result, the target element image is the second element image. If the target positioning result is the third positioning result, the target element image is the third element image, so that an element image corresponding to the historical positioning result of the vehicle is obtained, and the element image corresponding to the historical positioning result can be used to train the initial detection model, to obtain the target detection model used to detect reliability of the real-time positioning result.

In an example implementation, the first coordinates are converted into the second coordinates according to the following formula:

$$\begin{bmatrix} X_c \\ Y_c \\ Z_c \end{bmatrix} = \begin{bmatrix} R & T \\ 0^T & 1 \end{bmatrix} * \begin{bmatrix} X_w \\ Y_w \\ Z_w \\ 1 \end{bmatrix},$$

where
$(X_w, Y_w, Z_w)$ is the first coordinates, $(X_c, Y_c, Z_c)$ is the second coordinates, R is a three degrees of freedom rotation matrix of a posture in the target positioning result, and T is a translation matrix of the positioning coordinates in the target positioning result.

It can be learned that, in this implementation, the first coordinates of the map element point are converted into the second coordinates by using the three degrees of freedom rotation matrix of the posture in the target positioning result and the translation matrix of the positioning coordinates in the target positioning result. Because the second coordinates are the coordinates of the map element point in the coordinate system in which the positioning coordinates in the target positioning result are used as the origin, the coordinates of the map element point on the high-precision map are converted into the coordinate system in which the vehicle positioning coordinates are used as the origin, to facilitate detection of whether the positioning result of the vehicle is reliable.

In an example implementation, the second coordinates are converted into the image coordinates according to the following formula:

$$Z_c * \begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} * \begin{bmatrix} X_c \\ Y_c \\ Z_c \end{bmatrix},$$

where
(u, v) is the image coordinates, $f_x$ and $f_y$ are camera focal lengths of the vehicle-mounted terminal, and $u_0$ and $v_0$ are principal point coordinates relative to an imaging plane.

It can be learned that, in this implementation, the second coordinates are converted into the image coordinates by using the camera focal lengths of the vehicle-mounted terminal, to obtain the target element image corresponding to the target positioning result, and the pixel coordinates of the target element image are the image coordinates obtained by converting the second coordinates, to compare the target positioning result with the high-precision map, and therefore, detection on reliability of the target positioning result is facilitated.

In an example implementation, the method further includes: if the first positioning result directly comes from a positioning sensor, obtaining a positioning error covariance determined by the positioning sensor for the first positioning result; and determining a second detection result of the first positioning result based on the first detection result and the positioning error covariance.

Specifically, a positioning device such as a sensor GPS or an IMU at a current stage can generally obtain positioning performance of the sensor based on an observed value, and provide a positioning error covariance. The positioning error covariance can reflect reliability of a positioning result to some extent, but a confidence is not high. Therefore, when the first positioning result is directly provided by the positioning sensor, on the basis of obtaining the positioning error covariance determined by the positioning sensor for the first positioning result, the first positioning result can be further detected with reference to the first detection result of the first element image for the first positioning result, to obtain the second detection result of the first positioning result, so that a confidence of reliability of the first positioning result is improved.

It can be learned that, in this implementation, in a scenario in which the positioning sensor directly provides the first positioning result, the positioning sensor provides the positioning error covariance corresponding to the first positioning result, and the positioning error covariance may reflect reliability of the first positioning result. On this basis, reliability of the first positioning result is further evaluated with reference to the first detection result, so that confidence of reliability of the first positioning result can be further improved.

In an example implementation, the method further includes: if the first detection result and the second detection result indicate that the first positioning result is normal, performing self-driving by using the first positioning result; or if the first detection result and/or the second detection result indicate/indicates that the first positioning result is abnormal, alerting to disable self-driving.

Specifically, description can be provided with reference to the foregoing positioning reliability detection system. When a reliability detection module outputs that the first positioning result is normal, a safety module determines that the first positioning result is reliable, and a subsequent algorithm module may continue to use the first positioning result to perform self-driving. When the reliability detection module outputs that the first positioning result is abnormal, the safety module determines that the first positioning result is unreliable, provides an alarm, and indicates to disable self-driving, and manual takeover is performed.

It can be learned that, in this implementation, when it is detected that the first positioning result is normal, it indicates that the first positioning result is reliable, and can be used to perform self-driving of the autonomous vehicle; and when it is detected that the first positioning result is abnormal, it indicates that the first positioning result is unreliable, and self-driving of the autonomous vehicle can be alerted to be disabled, and manual takeover is performed, to reduce a potential safety risk caused by unreliable positioning.

The method in embodiments of this application is described in detail above. An apparatus in embodiments of this application is provided below.

FIG. 7 is a schematic diagram of a structure of a positioning reliability detection apparatus 700 according to an embodiment of this application. The positioning reliability detection apparatus 700 is applied to a vehicle-mounted terminal. The positioning reliability detection apparatus 700 may include an obtaining unit 701, a determining unit 702, and a detection unit 703. Detailed descriptions of the units are as follows:

The obtaining unit 701 is configured to obtain a first positioning result of a target vehicle.

The determining unit 702 is configured to determine a first element image based on the first positioning result and a high-precision map.

The detection unit 703 is configured to perform reliability detection on the first positioning result based on the first element image, to obtain a first detection result of the first positioning result.

In an example implementation, the detection unit 703 is configured to input the first element image to a target detection model for processing, to obtain the first detection result of the first positioning result. The target detection model is implemented based on a VGG architecture.

In an example implementation, the apparatus further includes a training unit, configured to: obtain N second positioning results and M third positioning results of vehicles, where the second positioning result is a historical positioning result of normal positioning, the third positioning result is a historical positioning result of abnormal positioning, and N and M are positive integers; determine N second element images based on the N second positioning results and the high-precision map, and determine M third element images based on the M third positioning results and the high-precision map, where the N second positioning results are in a one-to-one correspondence with the N second element images, and the M third positioning results are in a one-to-one correspondence with the M third element images; and train an initial detection model by using the N second element images and the M third element images, to obtain the target detection model, where the initial detection model is implemented based on the VGG architecture.

In an example implementation, the determining unit 702 is configured to: obtain map element point data in a preset region from the high-precision map, where the preset region is determined based on the target positioning result, and the map element point data includes a plurality of map element points; convert first coordinates of each of the plurality of map element points into second coordinates, where the first coordinates of each map element point are coordinates of the map element point in a world coordinate system, the second coordinates are coordinates of the map element point in a second coordinate system, and the second coordinate system is a coordinate system in which positioning coordinates in the target positioning result are used as an origin; and convert the second coordinates of each map element point into image coordinates based on an intrinsic parameter of a camera of the vehicle-mounted terminal, to obtain the target element image, where pixel coordinates of the target element image are the image coordinates. If the target positioning result is the first positioning result, the target element image is the first element image; if the target positioning result is the second positioning result, the target element image is the second element image; or if the target positioning result is the third positioning result, the target element image is the third element image.

In an example implementation, the first coordinates are converted into the second coordinates according to the following formula:

$$\begin{bmatrix} X_c \\ Y_c \\ Z_c \end{bmatrix} = \begin{bmatrix} R & T \\ 0^T & 1 \end{bmatrix} * \begin{bmatrix} X_w \\ Y_w \\ Z_w \\ 1 \end{bmatrix},$$

where

$(X_w, Y_w, Z_w)$ is the first coordinates, $(X_c, Y_c, Z_c)$ is the second coordinates, R is a three degrees of freedom rotation matrix of a posture in the target positioning result, and T is a translation matrix of the positioning coordinates in the target positioning result.

In an example implementation, the second coordinates are converted into the image coordinates according to the following formula:

$$Z_c * \begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} * \begin{bmatrix} X_c \\ Y_c \\ Z_c \end{bmatrix},$$

where

$(u, v)$ is the image coordinates, $f_x$ and $f_y$ are camera focal lengths of the vehicle-mounted terminal, and $u_0$ and $v_0$ are principal point coordinates relative to an imaging plane.

In an example implementation, the detection unit 703 is further configured to: if the first positioning result directly comes from a positioning sensor, obtain a positioning error covariance determined by the positioning sensor for the first positioning result; and determine a second detection result of the first positioning result based on the first detection result and the positioning error covariance.

In an example implementation, the apparatus further includes a processing unit, configured to: if the first detection result and the second detection result indicate that the first positioning result is normal, perform self-driving by using the first positioning result; or if the first detection result and/or the second detection result indicate/indicates that the first positioning result is abnormal, alert to disable self-driving.

It should be noted that, for implementations of the units, refer to the corresponding descriptions of the method embodiment shown in FIG. 2. Certainly, the positioning reliability detection apparatus 700 provided in this embodiment of this application includes but is not limited to the foregoing unit modules. For example, the positioning reliability detection apparatus 700 may further include a storage unit 704. The storage unit 704 can be configured to store program code and data of the positioning reliability detection apparatus 700.

In the positioning reliability detection apparatus 700 described in FIG. 7, after the first positioning result of the target vehicle is obtained, the first element image is determined based on the first positioning result and the high-precision map, and then reliability detection is performed on the first positioning result based on the first element image, to obtain the first detection result of the first positioning result. Because the first positioning result is converted into a binary image based on the high-precision map, the first positioning result is compared with the high-precision map, so that whether the first positioning result is reliable is detected. Further, the first positioning result is used when the first positioning result is reliable, so that a harm caused by unreliable positioning is effectively reduced, and a potential safety risk in self-driving is reduced.

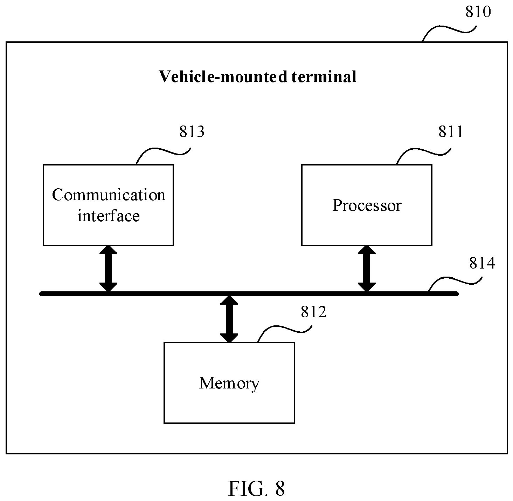

FIG. 8 is a schematic diagram of a structure of a vehicle-mounted terminal 810 according to an embodiment of this application. The vehicle-mounted terminal 810 includes a processor 811, a memory 812, and a communication interface 813. The processor 811, the memory 812, and the communication interface 813 are connected to each other by using a bus 814.

The memory 812 includes but is not limited to a random access memory (random access memory, RAM), a read-only memory (read-only memory, ROM), an erasable programmable read only memory (erasable programmable read only memory, EPROM), or a compact disc read-only memory (compact disc read-only memory, CD-ROM). The memory 812 is used for a related computer program and data. The communication interface 813 is configured to receive and send data.

The processor 811 can be one or more central processing units (central processing unit, CPU). When the processor 811 is one CPU, the CPU can be a single-core CPU, or can be a multi-core CPU.

The processor 811 in the vehicle-mounted terminal 810 is configured to read the computer program code stored in the memory 812, to perform the following operations: obtaining a first positioning result of a target vehicle; determining a first element image based on the first positioning result and a high-precision map; and performing reliability detection on the first positioning result based on the first element image, to obtain a first detection result of the first positioning result.

It should be noted that, for implementations of the operations, refer to the corresponding descriptions of the method embodiment shown in FIG. 2.

In the vehicle-mounted terminal 810 described in FIG. 8, after the first positioning result of the target vehicle is obtained, the first element image is determined based on the first positioning result and the high-precision map, and then reliability detection is performed on the first positioning result based on the first element image, to obtain the first detection result of the first positioning result. Because the first positioning result is converted into a binary image based on the high-precision map, the first positioning result is compared with the high-precision map, so that whether the first positioning result is reliable is detected. Further, the first positioning result is used when the first positioning result is reliable, so that a hazard caused by unreliable positioning is effectively reduced, and a potential safety risk in self-driving is reduced.

An embodiment of this application further provides a chip. The chip includes at least one processor, a memory, and an interface circuit. The memory, the transceiver, and the at least one processor are interconnected by using a line. The at least one memory stores a computer program. When the computer program is executed by the processor, the method procedure shown in FIG. 2 is implemented.

An embodiment of this application further provides a computer-readable storage medium. The computer-readable storage medium stores a computer program. When the computer program is run on a vehicle-mounted terminal, the method procedure shown in FIG. 2 is implemented.

An embodiment of this application further provides a computer program product. When the computer program product runs on a vehicle-mounted terminal, the method procedure shown in FIG. 2 is implemented.

An embodiment of this application further provides an intelligent vehicle. The intelligent vehicle includes a control system, and the control system performs the method shown in FIG. 2, to control the intelligent vehicle to travel.

In conclusion, by implementing embodiments of this application, after the first positioning result of the target vehicle is obtained, the first element image is determined based on the first positioning result and the high-precision map, and then reliability detection is performed on the first positioning result based on the first element image, to obtain the first detection result of the first positioning result. Because the first positioning result is converted into a binary image based on the high-precision map, the first positioning result is compared with the high-precision map, so that whether the first positioning result is reliable is detected. Further, the first positioning result is used when the first positioning result is reliable, so that a hazard caused by unreliable positioning is effectively reduced, and a potential safety risk in self-driving is reduced. In other words, this application can deal with a scenario in which reliability of a positioning result is provided in real time when a positioning algorithm is used to implement positioning and a positioning true value is missing, to compensate for a deficiency in a conventional technology that reliability of a positioning result with no positioning true value cannot be evaluated in real time. In a manner of projection on a high-precision map, the positioning result is converted into a binary image, and the positioning result is projected to the high-precision map, to compare the positioning result with the high-precision map, so that whether the positioning result is reliable is provided, and further, a reliable positioning result is used to effectively reduce a hazard caused by an unreliable positioning result.

It should be understood that the processor mentioned in embodiments of this application can be a central processing unit (Central Processing Unit, CPU), or can be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, a discrete hardware component, or the like. The general-purpose processor can be a microprocessor, or the processor can be any conventional processor or the like.

It should be further understood that the memory mentioned in embodiments of this application can be a volatile memory or a non-volatile memory, or may include a volatile memory and a non-volatile memory. The non-volatile memory can be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM) and is used as an external cache. Through example but not limitative description, many forms of RAMs can be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA, another programmable logic device, a discrete gate, a transistor logic device, or a discrete hardware component, the memory (storage module) is integrated into the processor.

It should be noted that the memory described in this specification is intended to include but not limited to these memories and any memory of another appropriate type.

It should be further understood that "first", "second", "third", "fourth", and various numbers in this specification are merely used for differentiation for ease of description, and are not intended to limit the scope of embodiments of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It can be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods can be implemented in other manners. For example, the described apparatus embodiment is merely an example. For example, division into the units is merely logical function division and can be other division during actual implementation. For example, a plurality of units or components can be combined or integrated into another system, or some features can be ignored or not performed. In addition, the displayed or discussed mutual couplings or direct couplings or communication connections can be implemented through some interfaces. The indirect couplings or communication connections between the apparatuses or units can be implemented in electrical, mechanical, or other forms.

The foregoing units described as separate parts may or may not be physically separate, and parts displayed as units may or may not be physical units, can be located in one position, or can be distributed on a plurality of network units. Some or all of the units can be selected based on actual requirements, to achieve the objectives of the solutions of embodiments.

In addition, functional units in embodiments of this application can be integrated into one processing unit, each of the units may exist alone physically, or two or more units can be integrated into one unit.

When functions are implemented in a form of a software functional unit and sold or used as an independent product, the functions can be stored in a computer-readable storage medium. Based on such an understanding, the technical solutions of this application essentially, or the part contributing to the conventional technology, or all or some of the technical solutions can be implemented in a form of a software product. The computer software product is stored in a storage medium and includes several instructions for instructing a computer device (which can be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

A sequence of the steps of the method in embodiments of this application can be adjusted, combined, or removed based on an actual requirement.

The modules in the apparatus in embodiments of this application can be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A positioning reliability detection method, applied to a vehicle-mounted terminal, wherein the method comprises:

    obtaining a first positioning result of a target vehicle;
    determining a first element image based on the first positioning result and a high-precision map; and
    performing reliability detection on the first positioning result based on the first element image, to obtain a first detection result of the first positioning result.

2. The method according to claim 1, wherein the performing reliability detection on the first positioning result based on the first element image, to obtain a first detection result of the first positioning result comprises:

    inputting the first element image into a target detection model for processing, to obtain the first detection result of the first positioning result, wherein

the target detection model is implemented based on a visual geometry group architecture.

3. The method according to claim 2, wherein before the inputting the first element image into a target detection model for processing, to obtain the first detection result of the first positioning result, the method further comprises:

obtaining N second positioning results and M third positioning results of vehicles, wherein the second positioning result is a historical positioning result of normal positioning, the third positioning result is a historical positioning result of abnormal positioning, and N and M are positive integers;

determining N second element images based on the N second positioning results and the high-precision map, and determining M third element images based on the M third positioning results and the high-precision map, wherein the N second positioning results are in a one-to-one correspondence with the N second element images, and the M third positioning results are in a one-to-one correspondence with the M third element images; and

training an initial detection model by using the N second element images and the M third element images, to obtain the target detection model, wherein

the initial detection model is implemented based on the visual geometry group architecture.

4. The method according to any one of claims 1 to 3, wherein a target element image is determined, based on a target positioning result and the high-precision map, by using the following steps:

obtaining map element point data in a preset region from the high-precision map, wherein the preset region is determined based on the target positioning result, and the map element point data comprises a plurality of map element points;

converting first coordinates of each of the plurality of map element points into second coordinates, wherein the first coordinates of each map element point are coordinates of the map element point in a world coordinate system, the second coordinates are coordinates of the map element point in a second coordinate system, and the second coordinate system is a coordinate system in which positioning coordinates in the target positioning result are used as an origin; and

converting the second coordinates of each map element point into image coordinates based on an intrinsic parameter of a camera of the vehicle-mounted terminal, to obtain the target element image, wherein pixel coordinates of the target element image are the image coordinates; and

if the target positioning result is the first positioning result, the target element image is the first element image; or

if the target positioning result is the second positioning result, the target element image is the second element image; or

if the target positioning result is the third positioning result, the target element image is the third element image.

5. The method according to claim 4, wherein the first coordinates are converted into the second coordinates according to the following formula:

$$\begin{bmatrix} X_c \\ Y_c \\ Z_c \end{bmatrix} = \begin{bmatrix} R & T \\ 0^T & 1 \end{bmatrix} * \begin{bmatrix} X_w \\ Y_w \\ Z_w \\ 1 \end{bmatrix},$$

wherein
$(X_w, Y_w, Z_w)$ is the first coordinates, $(X_c, Y_c, Z_c)$ is the second coordinates, R is a three degrees of freedom rotation matrix of a posture in the target positioning result, and T is a translation matrix of the positioning coordinates in the target positioning result.

6. The method according to claim 5, wherein the second coordinates are converted into the image coordinates according to the following formula:

$$Z_c * \begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} * \begin{bmatrix} X_c \\ Y_c \\ Z_c \end{bmatrix},$$

wherein
$(u, v)$ is the image coordinates, $f_x$ and $f_y$ are camera focal lengths of the vehicle-mounted terminal, and $u_0$ and $v_0$ are principal point coordinates relative to an imaging plane.

7. The method according to any one of claims 1 to 6, wherein the method further comprises:

if the first positioning result directly comes from a positioning sensor, obtaining a positioning error covariance determined by the positioning sensor for the first positioning result; and

determining a second detection result of the first positioning result based on the first detection result and the positioning error covariance.

8. The method according to any one of claims 1 to 7, wherein the method further comprises:

if the first detection result and the second detection result indicate that the first positioning result is normal, performing self-driving by using the first positioning result; or

if the first detection result and/or the second detection result indicate/indicates that the first positioning result is abnormal, alerting to disable self-driving.

9. A positioning reliability detection apparatus, applied to a vehicle-mounted terminal, wherein the apparatus comprises:

an obtaining unit, configured to obtain a first positioning result of a target vehicle;

a determining unit, configured to determine a first element image based on the first positioning result and a high-precision map; and

a detection unit, configured to perform reliability detection on the first positioning result based on the first element image, to obtain a first detection result of the first positioning result.

10. The apparatus according to claim 9, wherein the detection unit is configured to:

input the first element image into a target detection model for processing, to obtain the first detection result of the first positioning result, wherein

the target detection model is implemented based on a visual geometry group architecture.

11. The apparatus according to claim 10, wherein the apparatus further comprises a training unit, configured to:

obtain N second positioning results and M third positioning results of vehicles, wherein the second positioning result is a historical positioning result of normal positioning, the third positioning result is a historical positioning result of abnormal positioning, and N and M are positive integers;

determine N second element images based on the N second positioning results and the high-precision map, and determine M third element images based on the M third positioning results and the high-precision map, wherein the N second positioning results are in a one-to-one correspondence with the N second element images, and the M third positioning results are in a one-to-one correspondence with the M third element images; and

train an initial detection model by using the N second element images and the M third element images, to obtain the target detection model, wherein

the initial detection model is implemented based on the visual geometry group architecture.

12. The apparatus according to any one of claims 9 to 11, wherein the determining unit is configured to:

obtain map element point data in a preset region from the high-precision map, wherein the preset region is determined based on the target positioning result, and the map element point data comprises a plurality of map element points;

convert first coordinates of each of the plurality of map element points into second coordinates, wherein the first coordinates of each map element point are coordinates of the map element point in a world coordinate system, the second coordinates are coordinates of the map element point in a second coordinate system, and the second coordinate system is a coordinate system in which positioning coordinates in the target positioning result are used as an origin; and

convert the second coordinates of each map element point into image coordinates based on an intrinsic parameter of a camera of the vehicle-mounted terminal, to obtain the target element image, wherein pixel coordinates of the target element image are the image coordinates; and

if the target positioning result is the first positioning result, the target element image is the first element image; or

if the target positioning result is the second positioning result, the target element image is the second element image; or

if the target positioning result is the third positioning result, the target element image is the third element image.

13. The apparatus according to claim 12, wherein the first coordinates are converted into the second coordinates according to the following formula:

$$\begin{bmatrix} X_c \\ Y_c \\ Z_c \end{bmatrix} = \begin{bmatrix} R & T \\ 0^T & 1 \end{bmatrix} * \begin{bmatrix} X_w \\ Y_w \\ Z_w \\ 1 \end{bmatrix},$$

wherein
$(X_w, Y_w, Z_w)$ is the first coordinates, $(X_c, Y_c, Z_c)$ is the second coordinates, R is a three degrees of freedom rotation matrix of a posture in the target positioning result, and T is a translation matrix of the positioning coordinates in the target positioning result.

14. The apparatus according to claim 13, wherein the second coordinates are converted into the image coordinates according to the following formula:

$$Z_c * \begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} * \begin{bmatrix} X_c \\ Y_c \\ Z_c \end{bmatrix},$$

wherein
(u, v) is the image coordinates, $f_x$ and $f_y$ are camera focal lengths of the vehicle-mounted terminal, and $u_0$ and $v_0$ are principal point coordinates relative to an imaging plane.

15. The apparatus according to any one of claims 9 to 14, wherein the detection unit is further configured to:

if the first positioning result directly comes from a positioning sensor, obtain a positioning error covariance determined by the positioning sensor for the first positioning result; and
determine a second detection result of the first positioning result based on the first detection result and the positioning error covariance.

16. The apparatus according to any one of claims 9 to 15, wherein the apparatus further comprises a processing unit, configured to:

if the first detection result and the second detection result indicate that the first positioning result is normal, perform self-driving by using the first positioning result; or
if the first detection result and/or the second detection result indicate/indicates that the first positioning result is abnormal, alert to disable self-driving.

17. A vehicle-mounted terminal, comprising a processor, a memory, a communication interface, and one or more programs, wherein the one or more programs are stored in the memory and are configured to be executed by the processor, and the program comprises instructions for performing steps in the method according to any one of claims 1 to 8.

18. A chip, comprising a processor, configured to invoke a computer program from a memory and run the computer program, so that a device on which the chip is mounted performs the method according to any one of claims 1 to 8.

19. A computer-readable storage medium, wherein the computer-readable storage medium stores a computer program used for electronic data exchange, and the computer program enables a computer to perform the method according to any one of claims 1 to 8.

20. A computer program, wherein the computer program enables a computer to perform the method according to any one of claims 1 to 8.

21. An intelligent vehicle, wherein the intelligent vehicle comprises a control system, and the control system performs the method according to any one of claims 1 to 8, to control the intelligent vehicle to travel.

```
                    ┌──────────┐
                    │  High-   │
                    │precision │
                    │   map    │
                    └────┬─────┘
                         │
                         ▼
┌──────────┐    ┌──────────┐    ┌──────────┐    ┌──────────┐    ┌──────────┐
│Positioning│──▶│Projection│──▶│ Element  │──▶│Reliability│──▶│ Output  │
│  result  │    │  module  │    │  image   │    │detection │    │ result  │
└──────────┘    └──────────┘    └──────────┘    │  module  │    └────┬─────┘
                                                └──────────┘         │
                                                                     ▼
                                                              ┌──────────┐
                                                              │  Safety  │
                                                              │  module  │
                                                              └──────────┘
```

FIG. 1

┌────────────────────────────────────────────────────────────────────────┐
│        201: Obtain a first positioning result of a target vehicle        │
└────────────────────────────────────────────────────────────────────────┘
                                     │
                                     ▼
┌────────────────────────────────────────────────────────────────────────┐
│  202: Determine a first element image based on the first positioning     │
│                result and a high-precision map                           │
└────────────────────────────────────────────────────────────────────────┘
                                     │
                                     ▼
┌────────────────────────────────────────────────────────────────────────┐
│  203: Perform reliability detection on the first positioning result      │
│  based on the first element image, to obtain a first detection result    │
│                  of the first positioning result                         │
└────────────────────────────────────────────────────────────────────────┘

FIG. 2

FIG. 3

FIG. 4

FIG. 5

FIG. 6

700

**Positioning reliability detection apparatus**

701

Obtaining unit

704

Storage unit

702

Determining unit

703

Detection unit

FIG. 7

810

**Vehicle-mounted terminal**

813

Communication interface

811

Processor

814

812

Memory

FIG. 8

## INTERNATIONAL SEARCH REPORT

International application No.

**PCT/CN2021/101323**

| A. | CLASSIFICATION OF SUBJECT MATTER |
|---|---|
| | G06T 7/70(2017.01)i; G06K 9/00(2006.01)i; G01C 25/00(2006.01)i |

According to International Patent Classification (IPC) or to both national classification and IPC

| B. | FIELDS SEARCHED |
|---|---|

Minimum documentation searched (classification system followed by classification symbols)

G06T G06K G01C

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 自动驾驶, 定位, 可靠性, 有效性, 检测, 验证, 图像, 匹配, automatic drive, location, reliability, effectiveness, detection, test, verify, image, matching

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111198390 A (HYUNDAI MOTOR COMPANY et al.) 26 May 2020 (2020-05-26) description, paragraphs [0006]-[0077], and figures 1-3 | 1-4, 7-12, 15-21 |
| Y | CN 111198390 A (HYUNDAI MOTOR COMPANY et al.) 26 May 2020 (2020-05-26) description, paragraphs [0006]-[0077], and figures 1-3 | 5, 6, 13, 14 |
| Y | CN 103559791 A (BEIJING UNION UNIVERSITY) 05 February 2014 (2014-02-05) description, paragraphs [0024]-[0060], and figures 1-4 | 5, 6, 13, 14 |
| A | CN 108169765 A (FARADAY (BEIJING) NETWORK TECHNOLOGY CO., LTD.) 15 June 2018 (2018-06-15) entire document | 1-21 |
| A | CN 109115231 A (NEUSOFT REACH AUTOMOTIVE TECHNOLOGY (SHENYANG) CO., LTD.) 01 January 2019 (2019-01-01) entire document | 1-21 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 August 2021** | **15 September 2021** |

| Name and mailing address of the ISA/CN | Authorized officer |
|---|---|
| China National Intellectual Property Administration (ISA/ CN) No. 6, Xitucheng Road, Jimenqiao, Haidian District, Beijing 100088 China | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/101323**

| Patent document cited in search report | | | Publication date (day/month/year) | Patent family member(s) | | | Publication date (day/month/year) |
|---|---|---|---|---|---|---|---|
| CN | 111198390 | A | 26 May 2020 | US | 2020158887 | A1 | 21 May 2020 |
| | | | | KR | 20200057513 | A | 26 May 2020 |
| CN | 103559791 | A | 05 February 2014 | CN | 103559791 | B | 18 November 2015 |
| CN | 108169765 | A | 15 June 2018 | CN | 108169765 | B | 21 August 2020 |
| CN | 109115231 | A | 01 January 2019 | CN | 109115231 | B | 11 September 2020 |
| | | | | WO | 2020042642 | A1 | 05 March 2020 |
| | | | | WO | 2020042642 | A8 | 02 April 2020 |

**EP 4 198 900 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010890933